# FASCICULE DE BREVET EUROPEEN

(11) **EP 2 720 985 B1**
(45) Date de publication et mention de la délivrance du brevet: **23.05.2018**
(21) Numéro de dépôt: 12731577.8
(22) Date de dépôt: 15.06.2012
(51) Int. Cl.: C03C 17/00, C03C 17/34, B41M 1/12, B41M 1/34, B44C 1/00, B44C 3/02, C03C 8/14

(54) **PROCÉDÉ DE FABRICATION D'UN SUBSTRAT EN VERRE COMPORTANT DES MOTIFS IMPRIMES EN EMAIL**
VERFAHREN ZUR HERSTELLUNG EINES GLASSUBSTRATS MIT GEDRUCKTEN EMAILLEMUSTERN
PROCESS FOR MANUFACTURING A GLASS SUBSTRATE COMPRISING PRINTED ENAMEL PATTERNS

(30) Priorité: 17.06.2011 FR 1155312
(43) Date de publication de la demande: 23.04.2014
(73) Titulaire: Saint-Gobain Glass France, 92400 Courbevoie (FR)
(72) Inventeur: SAVARY, Jean-Philippe, 75018 Paris (FR); BEYRLE, André, 60170 Tracy le Val (FR); CHAHBOUNE, Kamel, 02200 Soissons (FR)
(74) Mandataire: Saint-Gobain Recherche
(86) Numéro de dépôt international: PCT/FR2012/051355
(87) Numéro de publication internationale: WO 2012/172269

(56) Documents cités:
- WO-A1-2006/064079
- WO-A2-2004/030935
- DE-A1-102007 008 443
- US-A- 4 321 778

## Description

La présente invention se rapporte au domaine des substrats en verre imprimés comportant des motifs à base d'émail.

Les substrats en verre imprimés sont utilisés dans des applications variées, notamment en tant que vitrages pour des bâtiments d'habitation, de bureau ou industriels, ou pour l'automobile, dans un but décoratif et/ou fonctionnel. La présente invention s'intéresse plus particulièrement au domaine relevant des vitrages dénommés « one way vision » en anglais qui permettent d'avoir une vision à sens unique, à savoir qu'un observateur se trouvant à l'intérieur d'un bâtiment aura une vision normale de l'environnement extérieur à ce même bâtiment et aucune vision lorsqu'il se situe de l'autre côté du vitrage.

De tels vitrages sont généralement obtenus en appliquant une première couche d'émail, de couleur différente du noir, directement sur le substrat en verre, sous la forme des motifs désirés, puis en déposant des pigments noirs sur l'ensemble des motifs et enfin en portant le substrat à une température permettant de cuire l'émail. Pendant la phase de cuisson de l'émail, la fritte de verre se ramollit et s'accroche au verre du substrat en retenant les pigments noirs. Après la cuisson, les pigments déposés en dehors des motifs, non fixés par l'émail, sont éliminés par un traitement approprié, par exemple par aspiration sous vide ou application d'un jet d'air ou d'eau.

Le procédé précité est décrit dans US 2006/0150680 sous la dénomination « top print pattern » ainsi que d'autres modes de réalisation dans lesquels l'encre céramique (notamment les pigments noirs) qui ne contient pas de fritte de verre est appliquée sur le substrat en verre soit à la surface d'une ou plusieurs couches (« top print pattern »), soit entre d'autres couches « intermediate print pattern »).

Le procédé « top print pattern » n'est cependant pas totalement satisfaisant. On constate que les couleurs manquent de vivacité, notamment la migration des pigments noirs dans une couche de couleur claire telle que le blanc fait que le blanc est perçu comme étant légèrement gris. De plus, l'utilisation d'une fritte de verre à fusibilité faible, nécessaire pour éviter une pénétration trop importante des pigments noirs dans la couche claire, impose une cuisson à des températures relativement élevées.

La présente invention a pour but de proposer un perfectionnement au procédé de fabrication d'un panneau en verre à vision à sens unique comportant un ou plusieurs motifs discrets en émail, composés de plusieurs couches en exacte coïncidence, procédé selon lequel :
a) on dépose au moins une couche d'une composition renfermant au moins un pigment minéral sur tout ou partie de la surface du panneau, ladite composition étant exempte de fritte de verre,
b) on dépose par sérigraphie au moins une couche d'une composition d'émail renfermant au moins une fritte de verre et au moins un pigment minéral de couleur différente de celui de l'étape a) sous la forme du ou des motifs désirés,
c) on chauffe le panneau revêtu desdites couches à une température suffisante pour cuire l'émail, et
d) on élimine les pigments non fixés par l'émail situés en dehors du ou des motifs,
**caractérisé en ce que** les particules de pigment(s) et les particules de(s) fritte(s) de verre ont une dimension similaire, notamment une distribution granulométrique telle que 50 % des particules ont une taille inférieure à 7 µm, préférentiellement inférieure à 5 µm et **en ce que** l'épaisseur de la couche de composition d'émail déposée à l'étape b) est supérieure à l'épaisseur de la couche de pigments déposée à l'étape a), l'épaisseur de la couche d'émail déposée à l'étape b) étant comprise entre 20 et 100 µm et l'épaisseur de la couche de pigments déposée à l'étape a) étant comprise entre 4 et 15 µm.

Les épaisseurs de la couche d'émail déposée à l'étape b) et de la couche de pigments déposée à l'étape a) sont mesurées sur les couches humides, c'est-à-dire avant cuisson ou chauffage.

Le dépôt de la couche de pigments à l'étape a) peut se faire par tout moyen connu de l'homme du métier, notamment par sérigraphie, à plat ou rotative.

Le pigment minéral est choisi de préférence parmi les pigments qui permettent de conférer une couleur noire après l'étape c). A titre d'exemples, on peut citer les pigments à base de chrome, de fer, de manganèse, de cuivre et/ou de cobalt, notamment sous forme d'oxydes ou de sulfures. Bien que les pigments à base de chrome permettent d'avoir une couleur noire intense, ils ne sont pas préférés du fait des problèmes liés à leur toxicité potentielle et à leur recyclage. Ainsi, de façon préférée, le pigment minéral est exempt de chrome.

Avantageusement, le pigment minéral noir présente une clarté L* telle que définie dans le modèle de représentation chromatique CIE Lab (1931) qui est inférieure ou égale à 15, de préférence inférieure ou égale à 10, mesurée sur le panneau de verre final.

Lorsque le dépôt est effectué par sérigraphie, le pigment est en général mélangé avec un médium organique qui permet d'ajuster la viscosité afin que le passage du mélange au travers des mailles de l'écran de sérigraphie puisse se faire correctement. La viscosité du mélange varie généralement de 80 à 120 Poises, de préférence de l'ordre de 100 Poises.

Le médium organique a aussi pour fonction d'assurer une fixation temporaire des pigments jusqu'à l'application de la couche suivante de composition d'émail.

Le médium organique doit pouvoir être éliminé dès le début de l'étape c) de cuisson de l'émail afin d'éviter l'apparition de pores et de craquelures dans l'émail final. Il s'agit en général d'un solvant organique, de préférence à base d'un mélange d'alcools « lourds » ou terpéniques (« huile de pin »), éventuellement associé à une ou plusieurs résines qui renforcent la fixation temporaire du pigment à la surface du panneau.

De façon préférée, l'épaisseur de la couche de pigments déposée sur le panneau en verre est au plus égale à 10 µm et de préférence varie de 6 à 10 µm. Cette épaisseur correspond à celle de la couche humide, c'est-à-dire avant chauffage ou cuisson.

Le dépôt de la composition d'émail conforme à l'invention est effectué par sérigraphie.

La sérigraphie est une technique d'impression bien connue qui utilise un écran de sérigraphie constitué d'un tissu sur lequel le(s) motif(s) à imprimer sont(sont) reproduit(s) et un râcle permettant d'appliquer une force de cisaillement suffisante pour faire passer la composition d'émail au travers des mailles de l'écran par les ouvertures correspondant au(x) motif(s) à imprimer et la déposer sur un support.

L'écran de sérigraphie doit présenter une ouverture de maille compatible avec la taille des particules contenues dans la composition d'émail. Les fils constituant ledit écran peuvent être des fils en acier ou en une matière polymérique, par exemple en polyester. Le nombre de fils par centimètre varie en général de 120 à 180 et de préférence est de l'ordre de 150. De préférence, le diamètre des fils varie de 25 à 35 µm.

La composition d'émail à sérigraphier est obtenue en mélangeant la fritte de verre et le pigment minéral avec un médium organique tel que défini précédemment.

Par « fritte de verre », on entend une composition vitrifiable sous la forme de poudre et à base d'oxydes. Conformément à l'invention, la fritte de verre se présente sous la forme de particules ayant une dimension comparable à celle des particules de pigments mis en oeuvre à l'étape a) et à l'étape b). Grâce à la faible dimension de ses particules combinée à une température de ramollissement également faible, la fritte de verre peut migrer aisément vers la surface du panneau en englobant les pigments qui se trouvent ainsi liés solidement et durablement au verre.

La fritte de verre conforme à l'invention est exempte d'oxyde de plomb PbO pour des raisons liées à la préservation de l'environnement.

De préférence, la fritte de verre est un borosilicate à base d'oxyde de bismuth Bi₂O₃ et/ou d'oxyde de zinc ZnO.

Par exemple, la fritte de verre à base de Bi₂O₃ contient 35 à 75 % en poids de SiO₂ et 20 à 40 % en poids de Bi₂O₃ et avantageusement 25 à 30 %.

Une telle fritte de verre présente une température de ramollissement qui varie de 550 à 580°C, de préférence est égale à 568°C.

Par exemple, la fritte de verre à base de ZnO contient 35 à 75 % en poids de SiO₂ et 4 à 10 % en poids de ZnO.

Une telle fritte de verre présente une température de ramollissement inférieure à 600°C, qui varie de 560 à 590°C, de préférence est égale à 577°C.

Comme déjà indiqué, le pigment minéral possède une couleur différente du pigment utilisé à l'étape a) et confère préférentiellement une couleur différente du noir.

De préférence, le pigment est choisi de telle sorte qu'il présente une coloration blanche après l'étape c). Ce pigment est notamment l'oxyde de titane TiO₂.

Avantageusement, le pigment minéral blanc présente une clarté L* telle que définie dans le modèle de représentation chromatique CIE Lab (1931) qui varie de 65 à 85, mesurée sur le panneau de verre final.

Le pigment peut être d'une couleur différente que le blanc, et est par exemple à base de Cr₂O₃ (coloration verte), de Co₃O₄ (coloration bleue) ou de Fe₂O₃ (coloration orange).

La proportion de pigments dans la composition de fritte de verre varie de 5 à 25 % en poids, de préférence 10 à 20 %.

La viscosité du mélange comprenant la fritte de verre, le pigment minéral et le médium organique varie généralement de 100 à 300 Poises, de préférence 180 à 200 Poises.

De façon préférée, l'épaisseur de la couche d'émail déposée sur la couche de pigments varie de 30 à 80 µm, de préférence 40 à 80 µm. Cette épaisseur correspond à celle de la couche d'émail humide, c'est-à-dire avant chauffage ou cuisson.

Dans l'étape c), le panneau de verre est traité à une température dite « de cuisson » qui permet à la fritte de verre de fondre pour former une couche de verre qui fixe les particules de pigments à la surface du panneau. Dans le domaine des émaux, la température de cuisson est la température minimale à laquelle on observe un frittage « suffisant » de la composition d'émail, ce frittage suffisant se traduisant notamment par un accrochage important au verre du panneau. L'homme du métier sait mesurer cette température de cuisson, par exemple en passant à la surface de l'émail (après que celui-ci a été porté à la température de traitement, puis refroidi) un stylo comportant une pointe métallique reliée à un ressort qui délivre une force de 20 Newtons et en notant la température de traitement la plus basse pour laquelle l'émail ne peut pas être décroché du verre.

La température de cuisson doit être suffisamment élevée pour cuire la fritte de verre et éventuellement tremper le verre, mais pas trop importante afin que la feuille de verre ne présente pas de déformations apparentes indésirables. En général la température de cuisson varie de 620 à 700°C, de préférence de 640 à 660°C.

Dans l'étape d), les pigments qui se situent en dehors des motifs sérigraphiés et qui n'ont pas été fixés par l'émail sont éliminés. Leur élimination peut être effectuée par tout moyen connu, par exemple mécanique, notamment par chiffonnage, brossage à sec ou humide, ou jet d'eau.

Eventuellement, on peut appliquer sur la couche d'émail, avant l'étape c), une couche supplémentaire de pigments de couleur différente des pigments présents dans la première couche et la couche d'émail. Cette couche supplémentaire est généralement appliquée de telle sorte qu'elle recouvre partiellement la surface de la couche d'émail, ce qui permet d'obtenir des motifs polychromes plus ou moins complexes.

Le cas échéant, après qu'une couche a été déposée et avant l'application de la couche suivante, on peut lui appliquer un traitement thermique en vue de réduire la quantité de médium organique. La température de traitement varie généralement de 70 à 150°C, et de préférence est au moins égale à 140°C. Le traitement peut être réalisé selon une méthode connue de l'homme du métier, par exemple au moyen de lampes à rayonnement infrarouge.

Le panneau de verre imprimé obtenu a ceci de remarquable que les pigments dans les motifs forment des couches distinctes ; on constate notamment qu'il n'y a pas eu de migration des pigments, seulement de la fritte de verre qui en fondant a lié les pigments à la surface du panneau de verre. Les motifs présentent sur leurs faces opposées des couleurs franches, non décolorées par un éventuel mélange des pigments.

Le panneau de verre imprimé obtenu par le procédé selon l'invention peut être utilisé seul ; dans ce cas il est préférable que le panneau ait été préalablement traité thermiquement dans des conditions de température telles que le verre final soit au moins durci, et de préférence soit trempé, afin que ledit panneau puisse être utilisé en toute sécurité.

Le panneau de verre obtenu par le procédé selon l'invention peut être constitué de tout type de verre, par exemple un verre silico-sodo-calcique, notamment obtenu par le procédé « Float ». En règle générale, il s'agit d'une feuille de verre dont l'épaisseur peut varier dans une large mesure selon l'application visée. A titre indicatif pour un panneau destiné à entrer dans la constitution d'un vitrage pour bâtiment, cette épaisseur varie de 2 à 20 mm, de préférence 4 à 12.

De préférence, notamment pour des raisons de sécurité des personnes, le panneau de verre est associé à une ou plusieurs feuilles de verre, notamment répondant à la définition donnée précédemment, par l'intermédiaire d'une ou plusieurs feuilles d'une matière thermoplastique ayant des propriétés adhésives à chaud pour former un panneau de verre feuilleté.

A titre d'exemple de feuille de matière thermoplastique, on peut citer les feuilles de butyrate de butyral de polyvinyle (PVB), d'éthylène-acétate de vinyle (EVA), de polyuréthane et de polycarbonate.

Le nombre de feuilles de verre dans le panneau feuilleté est fonction de sa taille et de la sollicitation mécanique à laquelle il est soumis. En général le panneau feuilleté comprend au plus 6 feuilles de verre y compris le panneau de verre imprimé, et de préférence 2 à 4 feuilles de verre.

L'association du panneau imprimé et des feuilles de verre avec les feuilles de matière thermoplastique est effectuée selon les méthodes connues, notamment utilisant un autoclave.

L'invention est illustrée au moyen des exemples suivants, non limitatifs.

Dans ces exemples, on mesure :
- la distribution granulométrique des particules à l'aide d'un diffractomètre laser (Malvern Mastersizer MS2000).
- l'épaisseur moyenne des couches par balayage de la surface à tester au moyen d'un perthomètre laser (MAHR LS10).
- la clarté L* dans les conditions de la recommandation CIE (1931) utilisant un illuminant D₆₅, un observateur à 10°, en mode SCE (composante spéculaire exclue) diffuse 8° (CM 600 Minolta).

### EXEMPLE 1

Sur une face d'un panneau en verre silico-sodo-calcique, on dépose par sérigraphie une première couche d'une composition renfermant des pigments noirs (commercialisée sous la référence VV31/60/2 par la société PEMCO, et exempte de chrome) et un médium organique (commercialisé sous la référence 243 par la société PEMCO) en une quantité permettant d'obtenir une viscosité de l'ordre 90 Poises (mesurée à l'aide d'un viscosimètre Haake VT550 ; vitesse de rotation : 23,2 rpm).

Les pigments noirs présentent une distribution telle que 50 % des particules ont une taille inférieure à 4 µm et 90 % de ces particules ont une taille inférieure à 6 µm.

L'épaisseur moyenne de la couche (humide) de pigments déposée sur le verre est égale à 6 µm.

On dépose ensuite par sérigraphie une deuxième couche d'une composition d'émail renfermant une fritte de verre et des pigments de TiO₂ (commercialisée sous la référence TDF 9070 par la société FERRO) et un médium organique (commercialisé sous la référence 801022 par la société FERRO) en une quantité permettant d'obtenir une viscosité de 200 Poises (mesurée dans les conditions précitées).

La fritte de verre présente une distribution telle que 50 % des particules ont une taille inférieure à 5 µm et 90 % de ces particules ont une taille inférieure à 8 µm.

La fritte de verre a la composition suivante (en pourcentage pondéral) : 54 % de SiO₂, 28,5 % de Bi₂O₃, 8 % de Na₂O, 3,5 % d'Al₂O₃ et 3 % de TiO₂, le reste étant constitué de BaO ; CaO, K₂O, P₂O₅, SrO et ZnO.

L'écran de sérigraphie est constitué d'un tissu de fils de polyester de 27 µm de diamètre comprenant 150 fils/cm qui permet de former une pluralité de motifs circulaires de 2 mm de diamètre répartis de telle sorte que le taux de recouvrement soit égal à 55 %.

L'épaisseur moyenne de la couche d'émail (humide) déposée sur le verre est égale à 50 µm.

Après le dépôt de chaque couche, le panneau de verre est introduit dans un dispositif de séchage équipé de lampes infrarouges opérant à une température de l'ordre de 145 à 155°C afin d'éliminer le médium organique et de consolider les couches. L'épaisseur moyenne de la couche de pigments et de la couche d'émail est respectivement égale à 1 µm et 30 µm.

Le panneau est ensuite chauffé à une température de 655°C dans un four afin que la fritte de verre fonde et forme l'émail qui enchâsse les particules de pigments. Après cuisson, les épaisseurs moyennes de la couche de pigments et de la couche d'émail sont respectivement égales à environ 1 µm et 23,5 µm.

Les pigments non fixés sont éliminés par brossage et lavage à l'eau.

Sur le panneau obtenu, on mesure la clarté au niveau des motifs apparaissant en noir (au travers du verre) et des motifs blancs (sur la face opposée).

La valeur de L* est inférieure à 10 sur la face noire et supérieure à 75 sur la face blanche.

### EXEMPLE 2 (comparatif)

On procède dans les conditions de l'exemple 1 modifiées en ce que l'on dépose en premier lieu une couche de la composition d'émail par sérigraphie à l'aide de l'écran portant les motifs, puis on dépose par sérigraphie à l'aide du même écran une couche de la composition de pigments noirs. Les couches sont déposées de telle sorte qu'elles se trouvent superposées en exacte coïncidence.

La valeur de L* est égale à 26 sur la face noire et égale à 55 sur la face blanche.

### EXEMPLE 3 (comparatif)

On procède dans les conditions de l'exemple 1. L'épaisseur moyenne de la couche (humide) de pigments déposée sur le verre est égale à 20 µm.

L'épaisseur moyenne de la couche d'émail (humide) déposée sur le verre est égale à 50 µm.

Après le dépôt de chaque couche, le panneau de verre est introduit dans un dispositif de séchage équipé de lampes infrarouges opérant à une température de l'ordre de 145 à 155°C afin d'éliminer le médium organique et de consolider les couches. Le panneau est ensuite chauffé à une température de 655°C dans un four afin que la fritte de verre fonde et forme l'émail qui enchâsse les particules de pigments. Après cuisson, les épaisseurs moyennes de la couche de pigments et de la couche d'émail sont respectivement égales à 2,6 µm et 21 µm.

Les pigments non fixés sont éliminés par brossage et lavage à l'eau.

Avec cette configuration, les pigments ne sont pas fixés sur le verre et la totalité de l'impression est retirée du verre, l'adhésion est alors impossible.

### EXEMPLE 4 (comparatif)

On procède dans les conditions de l'exemple 1. L'épaisseur moyenne de la couche (humide) de pigments déposée sur le verre est égale à 7 µm.

L'épaisseur moyenne de la couche d'émail (humide) déposée sur le verre est égale à 15 µm.

Après le dépôt de chaque couche, le panneau de verre est introduit dans un dispositif de séchage équipé de lampes infrarouges opérant à une température de l'ordre de 145 à 155°C afin d'éliminer le médium organique et de consolider les couches. Le panneau est ensuite chauffé à une température de 655°C dans un four afin que la fritte de verre fonde et forme l'émail qui enchâsse les particules de pigments. Après cuisson, les épaisseurs moyennes de la couche de pigments et de la couche d'émail sont respectivement égales à environ 0,33 µm et 6 µm.

Les pigments non fixés sont éliminés par brossage et lavage à l'eau.

Sur le panneau obtenu, on mesure la clarté au niveau des motifs apparaissant en noir (au travers du verre) et des motifs blancs (sur la face opposée).

La valeur de L* est inférieure à 10 sur la face noire et entre 55 et 60 sur la face blanche. Le blanc parait alors gris.

### EXEMPLE 5

On procède dans les conditions de l'exemple 1. L'épaisseur moyenne de la couche (humide) de pigments déposée sur le verre est égale à 7 µm.

On dépose ensuite par sérigraphie une deuxième couche d'une composition d'émail renfermant une fritte de verre et des pigments colorés (différents du blanc) et un médium organique (commercialisé sous la référence 801022 par la société FERRO)

L'épaisseur moyenne de la couche d'émail coloré (humide) déposée sur le verre est égale à 47 µm.

Après le dépôt de chaque couche, le panneau de verre est introduit dans un dispositif de séchage équipé de lampes infrarouges opérant à une température de l'ordre de 145 à 155°C afin d'éliminer le médium organique et de consolider les couches. Le panneau est ensuite chauffé à une température de 655°C dans un four afin que la fritte de verre fonde et forme l'émail qui enchâsse les particules de pigments. Après cuisson, les épaisseurs moyennes de la couche de pigments et de la couche d'émail sont respectivement égales à environ 1 µm et 23,5 µm.

Les pigments non fixés sont éliminés par brossage et lavage à l'eau.

Sur le panneau obtenu, on mesure la clarté au niveau des motifs apparaissant en noir (au travers du verre).

La valeur de L* est inférieure à 10.

## Revendications

1. Procédé de fabrication d'un panneau en verre à vision à sens unique comportant un ou plusieurs motifs discrets en émail, composés de plusieurs couches en exacte coïncidence, procédé dans lequel :
a) on dépose au moins une couche d'une composition renfermant au moins un pigment minéral sur tout ou partie de la surface du panneau, ladite composition étant exempte de fritte de verre, puis
b) on dépose par sérigraphie au moins une couche d'une composition d'émail renfermant au moins une fritte de verre et au moins un pigment minéral de couleur différente de celui de l'étape a) sous la forme du ou des motifs désirés, puis
c) on chauffe le panneau revêtu desdites couches à une température suffisante pour cuire l'émail, et
d) on élimine les pigments non fixés par l'émail situés en dehors du ou des motifs,
**caractérisé en ce que** les particules de pigment(s) et les particules de(s) fritte(s) de verre ont une dimension similaire, notamment une distribution granulométrique telle que 50 % des particules ont une taille inférieure à 7 µm, préférentiellement inférieure à 5 µm et **en ce que** l'épaisseur de la couche de composition d'émail déposée à l'étape b) est supérieure à l'épaisseur de la couche de pigments déposée à l'étape a), l'épaisseur de la couche d'émail déposée à l'étape b) étant comprise entre 20 et 100 µm et l'épaisseur de la couche de pigments déposée à l'étape a) étant comprise entre 4 et 15 µm.

2. Procédé selon la revendication 1, **caractérisé en ce que** l'épaisseur de la couche de pigments, avant chauffage, est au plus égale à 10 µm et de préférence varie de 6 à 10 µm.

3. Procédé selon la revendication 1 ou 2, **caractérisé en ce que** l'épaisseur de la couche d'émail déposée sur la couche de pigments, avant chauffage, varie de 30 à 80 µm , de préférence de 40 à 80 µm.

4. Procédé selon l'une des revendications 1 à 3, **caractérisé en ce que** le pigment minéral de l'étape a) est choisi parmi les pigments qui permettent de conférer une couleur noire après l'étape c).

5. Procédé selon la revendication 4, **caractérisé en ce que** le pigment est à base de chrome, de fer, de manganèse, de cuivre et/ou de cobalt, de préférence sous forme d'oxydes ou de sulfures.

6. Procédé selon l'une des revendications 1 à 5, **caractérisé en ce que** la fritte de verre est exempte d'oxyde de plomb PbO.

7. Procédé selon la revendication 6, **caractérisé en ce que** la fritte de verre contient 35 à 75 % en poids de SiO₂ et 20 à 40 % en poids de Bi₂O₃, avantageusement 25 à 30 %.

8. Procédé selon la revendication 7, **caractérisé en ce que** la fritte de verre renfermant du Bi₂O₃ présente une température de ramollissement qui varie de 550 à 580°C, de préférence est égale à 568°C.

9. Procédé selon la revendication 6, **caractérisé en ce que** la fritte de verre contient 35 à 75 % en poids de SiO₂ et 4 à 10 % en poids de ZnO.

10. Procédé selon la revendication 9, **caractérisé en ce que** la fritte renfermant du ZnO présente une température de ramollissement inférieure à 600°C.

11. Procédé selon l'une des revendications 1 à 10, **caractérisé en ce que** le pigment minéral de l'émail de l'étape b) possède une couleur différente du pigment utilisé à l'étape a) et confère préférentiellement une couleur différente du noir.

12. Procédé selon la revendication 11, **caractérisé en ce que** le pigment de l'étape b) est choisi parmi les pigments qui permettent de conférer une couleur blanche après l'étape c) et est préférentiellement à base de TiO₂.

13. Procédé selon la revendication 11, **caractérisé en ce que** le pigment utilisé dans l'étape b) est d'une couleur différente que le blanc, et est par exemple à base de Cr₂O₃, de Co₃O₄, ou de Fe₂O₃.

14. Procédé selon l'une des revendications 1 à 13, **caractérisé en ce que** la proportion de pigments dans la composition de fritte de verre de l'étape b) varie de 5 à 25 % en poids, de préférence 10 à 20 %.

## Patentansprüche

1. Verfahren zur Herstellung einer einseitig durchsichtigen Glasscheibe mit einem oder mehreren diskreten Emaillemustern, bestehend aus mehreren exakt deckungsgleichen Schichten, wobei bei dem Verfahren
a) mindestens eine Schicht einer Zusammensetzung, die mindestens ein mineralisches Pigment beinhaltet, auf die gesamte oder einen Teil der Oberfläche der Scheibe aufgetragen wird, wobei die Zusammensetzung frei von Glasfritte ist, dann
b) durch Siebdruck mindestens eine Schicht einer Emaillezusammensetzung, die mindestens eine Glasfritte und mindestens ein mineralisches Pigment, das eine andere Farbe als das aus Schritt a) hat, in Form des oder der gewünschten Muster aufgetragen wird, dann
c) die mit den Schichten überzogene Scheibe auf eine zum Einbrennen der Emaille ausreichende Temperatur erhitzt wird, und
d) die von der Emaille nicht fixierten Pigmente, die außerhalb des oder der Muster liegen, entfernt werden,
**dadurch gekennzeichnet, dass** die Pigmentpartikel und die Glasfrittepartikel eine ähnliche Größe haben, insbesondere eine derartige Korngrößenverteilung, dass 50 % der Partikel eine Größe von weniger als 7 µm, bevorzugt weniger als 5 µm, haben und **dass** die Dicke der in Schritt b) aufgetragenen Schicht der Emaillezusammensetzung größer als die Dicke der in Schritt a) aufgetragenen Pigmentschicht ist, wobei die Dicke der in Schritt b) aufgetragenen Emailleschicht zwischen 20 und 100 µm beträgt und die Dicke der in Schritt a) aufgetragenen Pigmentschicht zwischen 4 und 15 µm beträgt.

2. Verfahren nach Anspruch 1, **dadurch gekennzeichnet, dass** die Dicke der Pigmentschicht vor dem Erhitzen höchstens 10 µm beträgt und bevorzugt von 6 bis 10 µm variiert.

3. Verfahren nach Anspruch 1 oder 2, **dadurch gekennzeichnet, dass** die Dicke der auf die Pigmentschicht aufgetragenen Emailleschicht vor dem Erhitzen von 30 bis 80 µm, bevorzugt von 40 bis 80 µm, variiert.

4. Verfahren nach einem der Ansprüche 1 bis 3, **dadurch gekennzeichnet, dass** das mineralische Pigment aus Schritt a) unter den Pigmenten gewählt wird, die es ermöglichen, nach Schritt c) eine schwarze Farbe zu verleihen.

5. Verfahren nach Anspruch 4, **dadurch gekennzeichnet, dass** das Pigment auf Chrom, Eisen, Mangan, Kupfer und/oder Kobalt, bevorzugt in Form von Oxiden oder Sulfiden, basiert.

6. Verfahren nach einem der Ansprüche 1 bis 5, **dadurch gekennzeichnet, dass** die Glasfritte frei von Bleioxid PbO ist.

7. Verfahren nach Anspruch 6, **dadurch gekennzeichnet, dass** die Glasfritte 35 bis 75 Gew.-% von SiO₂ und 20 bis 40 Gew.-%, vorteilhafterweise 25 bis 30 Gew.-%, von Bi₂O₃ enthält.

8. Verfahren nach Anspruch 7, **dadurch gekennzeichnet, dass** die Bi₂O₃ beinhaltende Glasfritte eine Erweichungstemperatur aufweist, die von 550 bis 580 °C variiert und bevorzugt 568 °C beträgt.

9. Verfahren nach Anspruch 6, **dadurch gekennzeichnet, dass** die Glasfritte 35 bis 75 Gew.-% von SiO₂ und 4 bis 10 Gew.-% von ZnO enthält.

10. Verfahren nach Anspruch 9, **dadurch gekennzeichnet, dass** die ZnO beinhaltende Fritte eine Erweichungstemperatur von weniger als 600 °C aufweist.

11. Verfahren nach einem der Ansprüche 1 bis 10, **dadurch gekennzeichnet, dass** das mineralische Pigment der Emaille aus Schritt b) eine andere Farbe als das in Schritt a) verwendete Pigment besitzt und bevorzugt eine andere Farbe als Schwarz verleiht.

12. Verfahren nach Anspruch 11, **dadurch gekennzeichnet, dass** das Pigment aus Schritt b) unter den Pigmenten gewählt wird, die es ermöglichen, nach Schritt c) eine weiße Farbe zu verleihen und bevorzugt auf TiO₂ basiert.

13. Verfahren nach Anspruch 11, **dadurch gekennzeichnet, dass** das in Schritt b) verwendete Pigment eine andere Farbe als Weiß hat und beispielsweise auf Cr₂O₃, Co₃O₄ oder Fe₂O₃ basiert.

14. Verfahren nach einem der Ansprüche 1 bis 13, **dadurch gekennzeichnet, dass** der Anteil der Pigmente in der Glasfrittezusammensetzung von Schritt b) von 5 bis 25 Gew.-%, bevorzugt 10 bis 20 Gew.-%, variiert.

## Claims

1. A process for manufacturing a one-way vision glass pane comprising one or more separate enamel patterns composed of a number of exactly aligned layers, process in which:
a) at least one layer of a compound comprising at least one mineral pigment is deposited over all or part of the area of the pane, said compound being free of glass frit; then
b) at least one layer of an enamel compound comprising at least one glass frit and at least one mineral pigment of a different color to the pigment of step a) is deposited, by screen printing, in the shape of the one or more desired patterns; then
c) the pane coated with said layers is heated to a temperature high enough to bake the enamel; and
d) pigments that have not been fixed by the enamel, which pigments are located outside of the one or more patterns, are removed,
**characterized in that** the particles of the one or more pigments and the particles of the one or more glass frits are of similar size, especially having a particle size distribution such that 50% of the particles are smaller than 7 µm in size and preferably smaller than 5 µm in size, and **in that** the thickness of the layer of an enamel compound deposited in step b) is larger than the thickness of the pigment layer deposited in step a), the enamel layer deposited in step b) being between 20 and 100 µm in thickness and the pigment layer deposited in step a) being between 4 and 15 µm in thickness.

2. The process as claimed in claim 1, **characterized in that** the pigment layer, before baking, is at most equal to 10 µm in thickness and preferably ranges from 6 to 10 µm in thickness.

3. The process as claimed in either of claims 1 and 2, **characterized in that** the enamel layer deposited on the pigment layer ranges, before baking, from 30 to 80 µm in thickness and preferably from 40 to 80 µm in thickness.

4. The process as claimed in one of claims 1 to 3, **characterized in that** the mineral pigment of step a) is chosen from pigments that impart a black color after step c).

5. The process as claimed in claim 4, **characterized in that** the pigment is based on chromium, iron, manganese, copper and/or cobalt, preferably in the form of oxides or sulfides.

6. The process as claimed in one of claims 1 to 5, **characterized in that** the glass frit is free of lead oxide PbO.

7. The process as claimed in claim 6, **characterized in that** the glass frit contains 35 to 75 wt% of SiO₂ and 20 to 40 wt% of Bi₂O₃ and advantageously 25 to 30 wt%.

8. The process as claimed in claim 7, **characterized in that** the Bi₂O₃-comprising glass frit has a softening temperature that ranges from 550 to 580°C and is preferably equal to 568°C.

9. The process as claimed in claim 6, **characterized in that** the glass frit contains 35 to 75 wt% of SiO₂ and 4 to 10 wt% of ZnO.

10. The process as claimed in claim 9, **characterized in that** the ZnO-comprising glass frit has a softening temperature below 600°C.

11. The process as claimed in one of claims 1 to 10, **characterized in that** the mineral pigment of the enamel in step b) has a different color from the pigment used in step a) and preferably imparts a color other than black.

12. The process as claimed in claim 11, **characterized in that** the pigment of step b) is chosen from pigments that impart a white color after step c), said pigment preferably being based on TiO₂.

13. The process as claimed in claim 11, **characterized in that** the pigment used in step b) is of a color other than white, and is for example based on Cr₂O₃, Co₃O₄ or Fe₂O₃.

14. The process as claimed in one of claims 1 to 13, **characterized in that** the proportion of pigments in the glass frit compound of step b) ranges from 5 to 25 wt% and preferably from 10 to 20 wt%.
